# EUROPÄISCHE PATENTSCHRIFT

(11) **EP 0 920 616 B1**
(45) Veröffentlichungstag und Bekanntmachung des Hinweises auf die Patenterteilung: **10.04.2002**
(21) Anmeldenummer: 97941836.5
(22) Anmeldetag: 21.08.1997
(51) Int. Cl.: G01N 21/88

(54) **VORRICHTUNG ZUR VISUELLEN INSPEKTION DER OBERFLÄCHENBESCHAFFENHEIT VON ABMUSTERUNGSFLÄCHEN GRÖSSERER ABMESSUNG**
DEVICE FOR VISUALLY INSPECTING THE SURFACE CONDITION OF LARGE-DIMENSION SURFACES TO BE MATCHED
DISPOSITIF D'INSPECTION VISUELLE DE LA STRUCTURE SUPERFICIELLE DE SURFACES D'ECHANTILLONNAGE DE DIMENSIONS IMPORTANTES

(30) Priorität: 22.08.1996 DE 19633806; 29.10.1996 DE 19644907; 05.12.1996 DE 19650469; 04.01.1997 DE 19700215
(43) Veröffentlichungstag der Anmeldung: 09.06.1999
(73) Patentinhaber: DR. ING. WILLING GMBH, D-96110 Schesslitz (DE)
(72) Erfinder: WILLING, Achim, D-96110 Schesslitz (DE)
(74) Vertreter: Pfenning, Meinig & Partner
(86) Internationale Anmeldenummer: DE9701870
(87) Internationale Veröffentlichungsnummer: WO9808078

(56) Entgegenhaltungen:
- EP-A- 0 286 994
- DE-A- 3 813 239
- DE-A- 4 012 372
- DE-A- 19 534 145
- GB-A- 2 173 299
- US-A- 5 414 518
- US-A- 5 436 726

## Beschreibung

Die Erfindung betrifft eine Vorrichtung zur visuellen Inspektion der Oberflächenbeschaffenheit von Abmusterungsflächen größerer Abmessung, insbesondere lakkierten Karosserien, mit im wesentlichen senkrechten und waagerechten Abmusterungsflächen.

Nach dem Stand der Technik sind optische Vorrichtungen für die Farbbeurteilung kleiner Flächen bekannt, jedoch sind diese Vorrichtungen nicht einsetzbar für die Beurteilung großer Flächen, zum Beispiel gesamter Karosserien im Automobilbau. Weiterhin sind verschiedene Beleuchtungsstrukturen zur Erkennung von Oberflächenfehlern bekannt, bei denen die betroffene Person direkt in die Lampe sehen muß und somit geblendet wird. Außerdem bewirken die bekannten Anordnungen zur Erkennung von Oberflächenfehlern Abschattungen durch die arbeitenden Personen, wodurch eine Fehlererkennung nur an bestimmten örtlich stark voneinander differierenden Positionen möglich ist. Die bekannten Vorrichtungen zur erkennung von Oberflächenfehlern lassen nicht gleichzeitig eine Erkennung von Farbfehlern zu.

DE 195 34 145 A1 beschreibt eine Vorrichtung und ein Verfahren zur Inspektion spiegelnder und halbspiegelnder Oberflächen, bei dem ein die Oberflächen umgebender Hintergrund nichtreflektierend und lichtabsorbierend ist. Abschnitte, z. B. Streifen des Hintergrundes, sind beleuchtet, d. h. bilden leuchtende Elemente. Diese Streifen werden auf den Oberflächen, beispielsweise an einer lackierten Autokarosserie, abgebildet, und die reflektierten Bilder der Streifen können an den Oberflächen betrachtet werden.

Der Erfindung liegt daher die Aufgabe zugrunde, eine Vorrichtung zur visuellen Inspektion der Oberflächenbeschaffenheit von Abmusterungsflächen größerer Abmessung zu schaffen, mit der es möglich ist, sowohl Oberflächenfehler als auch Farbfehler bei großflächigen Gegenständen, insbesondere lackierten Karosserien, zu erkennen, wobei die Arbeitenden nicht geblendet werden und eine Abschattung durch die Arbeitenden nicht auftritt.

Diese Aufgabe wird erfindungsgemäß durch die kennzeichnenden Merkmale des Hauptanspruchs gelöst.

Die visuelle Inspektion von Abmusterungsflächen schließt sowohl die Abmusterung von Farben, Farbeffekten und Glanz als auch die Erkennung von Lackierfehlern ein. Die Erkennung der unterschiedlichen Fehler erfordert jeweils spezifische Zuordnungen von Beobachtungsrichtung und Beleuchtungsrichtung, und auch die Gestaltung der Umgebung ist von großer Wichtigkeit. Für die Abmusterung der Farbe ist beispielsweise eine schräge Lichteinstrahlung verbunden mit senkrechter Betrachtung günstig, wobei eine niedrige Leuchtdichte der auf die glänzende Abmusterungsoberfläche gespiegelten Raumbegrenzung wichtig ist, da eine zu stark ausgeprägte überlagerte Beleuchtungsstruktur oder Leuchtdichte der Raumbegrenzung sich dem Farbeindruck überlagert und die Erkennung von

Farbunterschieden verhindert. Das bedeutet, daß die Leuchten bzw. Lampen sich nicht auf den Abmusterungsflächen spiegeln dürfen.

Dahingegen ist für die Erkennung von Oberflächenfehlern eine Spiegelung der Leuchtenstruktur vorteilhaft, da an den entsprechenden gespiegelten Hell-Dunkel-Grenzen Fehler durch Änderung des Verlaufs sichtbar werden.

Für die Erfindung ergeben sich folgende Zuordnungen von Strahlengängen und Fehlerarten bzw. Sehaufgaben:
Strahlengänge mit abgebildeter Beleuchtungsstruktur erlauben die Erkennung von Oberflächen, die sich durch eine geometrische Verformung der betrachteten Oberfläche markieren. Weiterhin wird die Bewertung von Glanz sowie die Bewertung der Wirkung von Effektlacken ermöglicht.
Strahlengänge ohne Abbildung der Beleuchtungsstruktur ermöglichen die Erkennung und den Vergleich von Farben sowie die Erkennung von Oberflächenfehlern, die keine geometrische Verformung der Oberfläche zur Folge haben. Durch Änderung von Beleuchtungs- und/oder Beobachtungswinkel werden ebenfalls Farbeffekte sichtbar.

Zur Unterscheidung der verschiedenen Strahlengänge ist der Glanzwinkel zu berücksichtigen, wobei der Glanzwinkel als derjenige Winkel definiert ist, um den der Beobachtungswinkel bei einer gerichteten Reflexion von der Richtung des reflektierten Lichtstrahls abweicht. Je nach Größe des Glanzwinkels ergeben sich somit zwei Beobachtungsgeometrien:
Kleine Glanzwinkel, zum Beispiel ungefähr 15°, bewirken Strahlengänge, bei denen sich die Beleuchtungsstruktur abbildet, so daß eine Oberflächenerkennung möglich ist.
Große Glanzwinkel, zum Beispiel ungefähr 45°, verhindern die Abbildung einer Beleuchtungsstruktur, was bei einer Farbabmusterung nützlich ist.

Unter Berücksichtigung obiger Erkenntnisse wird die der Erfindung zugrundeliegende Aufgabe dadurch gelöst, daß mehrere Leuchtelemente in fester Zuordnung zu der Abmusterungsfläche vorgesehen sind, deren Hauptstrahlrichtung in schrägen Winkeln bei senkrechter Anordnung in horizontalen Ebenen gesehen zu den Abmusterungsflächen gerichtet ist, wobei die Leuchtelemente mit Abschirmungen versehen sind, die in einer Richtung zwischen Hauptstrahlrichtung und der Richtung senkrecht auf die Abmusterungsfläche zu wirksam sind, derart, daß zumindest bei Beobachtung der Abmessung aus Winkeln nahe der Richtung der Normalen auf diese keine leuchtenden Teile der Leuchtelemente gespiegelt werden. Die Leuchtelemente sind dabei so abgeschirmt, daß Strahlen, die aus Richtungen der Normalen der Abmusterungsfläche und in einem Winkelbereich um die Normale herum auf Leuchtelemente treffen, entweder direkt oder nach Reflexion an den Leuchtelementen zugeordneten lichtlenkenden Reflektoren auf lichtabsorbierende Blenden treffen.

Durch die erfindungsgemäße Vorrichtung, bei der die Leuchtelemente schräg, vorzugsweise unter 45°, auf die Abmusterungsflächen strahlen, sind sowohl Oberflächenfehler jeglicher Art als auch Farbfehler sowie weitere Oberflächeneffekte, zum Beispiel der Flopp bei Metallic-Lackierungen erkennbar, wobei der Beobachter sich vorzugsweise bei der Abmusterung des Gegenstandes zwischen diesem und den Leuchtelementen befindet und durch seinen Standortwechsel und bzw. durch Wechsel der Blickrichtung alle benötigten Strahlengänge und Beobachtungsgänge realisiert werden können. Die Leuchtelemente sind gegen direkten Einblick aus Richtung der Normalen der Abmusterungsflächen und in einem Winkelbereich um die Normale herum gegen direkten Einblick abgeschirmt und bleiben somit in diesen Richtungen ohne Lichtabstrahlung. Eine Blendung des Beobachters sowie die Überlagerung des Beobachtungsfeldes durch Beleuchtungsreflexe im Falle der Farbinspektion treten nicht auf.

Durch die in den Unteransprüchen angegebenen Maßnahmen sind vorteilhafte Weiterbildungen und Verbesserungen möglich.

Die Abmusterungsflächen können waagerecht, senkrecht aber auch schräg angeordnet sein. Unter dem Begriff im wesentlichen senkrechte und waagerechte Abmusterungsflächen, wie sie bei lackierten Karosserien auftreten, sollen auch solche Flächen verstanden werden, die leicht gekrümmt sind, wobei eine entsprechende Anpassung der Beleuchtungsgeometrie, falls gewünscht, möglich ist.

Die Qualität der Abmusterung von waagerechten Flächen, zum Beispiel Dachflächen an Karosserien, kann durch eine Deckenbeleuchtung, die vorzugsweise das Licht schräg abstrahlt und vorteilhafterweise aus Richtungen senkrecht von unten und in einem Winkelbereich um diese Richtung abgeschirmt ist. Die Beobachtung der senkrechten Flächen, zum Beispiel Seitenflächen der Karosserien, kann im bodennahen Bereich durch nach oben strahlende Bodenleuchten, insbesondere in Ausrichtung quer zur beobachtenden Fläche, verbessert werden. Dabei können die Boden- und Deckenleuchtelemente durch Spiegel am Boden oder Decke zur Fortsetzung der Beleuchtungsgeometrie der Seitenwände ersetzt werden.

Im einfachsten Fall kann erfindungsgemäß die Lichtverteilung und Abschattung der Beleuchtungsanordnung durch eine leuchtende Wand oder eine Vielzahl von Einzelleuchten, eventuell bereits mit gebündelter Lichtverteilung realisiert werden, von denen senkrechte, schräg, im wesentlichen parallel zur gewünschten Hauptabstrahlrichtung ausgerichtete Lamellen so eng zueinander angeordnet sind, daß ein direkter Einblick in einem Winkelbereich um die Normale der senkrechten Abmusterungsfläche herum nicht mehr möglich ist.

Durch Ausbilden der Leuchtelemente als Leuchten mit einem vorzugsweise einachsig gekrümmten Reflektor, der das Licht einer oder mehrerer parallel zur Reflektorachse angeordneten langgestreckten Lampen, vorzugsweise Leuchtstofflampen, in Ebenen quer zur Lampenachse bündelt, wobei vorzugsweise parallel zur Hauptstrahlrichtung auf die Lampe zu verlaufend eine scheibenförmige Blende angeordnet ist, wird eine Beleuchtungseinrichtung mit Leuchten mit integrierten Abblendvorrichtungen und flachem Aufbau bei hohem Leuchtenwirkungsgrad zur Verfügung gestellt. Weiterhin können diese Leuchten als Einzelmodule eingesetzt werden.

Weiterhin kann die Abschirmung dadurch verbessert werden, daß in der einen Reflektorhälfte mehrere Blenden parallel zur ersten Blende angeordnet werden.

Die Farbabmusterung wird dadurch verbessert und variabler gestaltet, daß zumindest die Blendenoberflächen, die dem Reflektorteil zugewandt sind, an denen die Einfallslichtstrahlen reflektieren, absorbierend und farbneutral, zum Beispiel schwarz oder grau, sind, wodurch eine zur Vermeidung von Blendung und Irritationen bei der Abmusterung ausreichende Absenkung der Leuchtdichten erfolgt.

Eine weitere Verringerung der Bautiefe der Leuchten ergibt sich dadurch, daß die eine Reflektorhälfte, die dem Beobachter zugewandt ist, abgeschnitten ist, wobei dann die mittlere Blende die Gehäusewand des Reflektors darstellen kann. Vorteilhaft ist es weiterhin, um die Lampe herum einen lichtsammelnden Reflektor vorzusehen. Dabei kann dieser lichtsammelnde Reflektor entweder das Licht zurück in die Lampe schicken mit der Wirkung einer kleinen Grundstreuung des Systems, jedoch kleinerem Wirkungsgrad, oder aber die Lampe umgehen mit der Wirkung einer größeren Grundstreuung und eines höheren Wirkungsgrades. In einer vorteilhaften Ausgestaltung sind die Leuchten dimmbar, wobei ein Lichtstromabfall der Lampen mit der Lebensdauer dadurch ausgeglichen wird, daß die Lampen im gedimmten Zustand betrieben werden und mit zunehmendem Lichtstromabfall die Dimmung zurückgenommen wird. Weiterhin hat die Dimmbarkeit den Vorteil, daß durch mehrere Abmusterungsleuchten ein gewünschtes Beleuchtungsstärkeprofil auf einer zu inspizierenden Fläche eingestellt werden kann.

In vorteilhafter Weise können, um Absorptionsverluste an den Außenflächen auf ein Minimum zu reduzieren, an den seitlichen Außenflächen der Leuchtengehäuse gerichtet reflektierende Außenreflektoren angebracht und vorzugsweise als Fortsetzung des Reflektors der daneben angeordneten Leuchte ausgeführt werden, wobei die Reflektoren zumindest teilweise in die Gehäuseform integriert werden können.

Andererseits können diese Flächen aber auch farbneutral mit geringem Reflexionsgrad ausgeführt werden, um Reflexe zu vermeiden.

Ausführungsbeispiele der Erfindung sind in der Zeichnung dargestellt und werden in der nachfolgenden Beschreibung näher erläutert. Es zeigen:
- Fig. 1: eine Aufsicht auf die erfindungsgemäße Vorrichtung mit einer Karosserie als Abmusterungsgegenstand,
- Fig. 2: eine Seitenansicht der erfindungsgemäßen Vorrichtung,
- Fig. 3: eine Aufsicht auf ein zweites Ausführungsbeispiel der erfindungsgemäßen Vorrichtung,
- Fig. 4: eine Aufsicht auf ein drittes Ausführungsbeispiel der erfindungsgemäßen Vorrichtung,
- Fig. 5: eine Seitenansicht einer waagerechten Fläche, zum Beispiel des Daches einer Karosserie durch eine Deckenbeleuchtung,
- Fig. 6: eine Seitenansicht der Beleuchtung der oberen Seitenfläche einer Karosserie mit Deckenleuchten,
- Fig. 7: eine Aufsicht auf die Leuchten mit vorgeschalteten Lamellen als Abschirmung,
- Fig. 8: einen Schnitt durch eine erste bei der Erfindung verwendete Leuchte mit Strahlengängen,
- Fig. 9: einen Schnitt durch ein zweites Ausführungsbeispiel einer verwendeten Leuchte,
- Fig. 10: einen Schnitt durch ein weiteres Ausführungsbeispiel einer Leuchte mit Strahlengängen,
- Fign. 11 und 12: einen Schnitt durch eine weitere Leuchte mit mehreren Blenden unterschiedlicher Ausführungsform,
- Fig. 13: die Oberfläche einer Blende mit einem Absorptionsraster,
- Fig. 14: einen Schnitt und die Aufsicht auf eine Leuchte mit parallelen quer zur Lampenachse angeordneten Lamellen oder Scheiben,
- Fig. 15: einen Schnitt durch zwei nebeneinanderliegenden Leuchten,
- Fig. 16: einen Schnitt durch ein weiteres Ausführungsbeispiel einer Leuchte, die bei der Erfindung verwendet wird,
- Fig. 17: eine Aufsicht auf einen Teil der bei der Erfindung verwendeten Leuchtenanordnung in zwei Ausführungsformen,
- Fign. 18 und 19: einen Schnitt durch ein weiteres Ausführungsbeispiel einer bei der Erfindung verwendeten Leuchte mit unterschiedlichen Strahlengängen und
- Fig. 20: eine schematische Darstellung einer weiteren bei der Erfindung verwendeten Leuchte im Schnitt mit unterschiedlichen Strahlengängen.

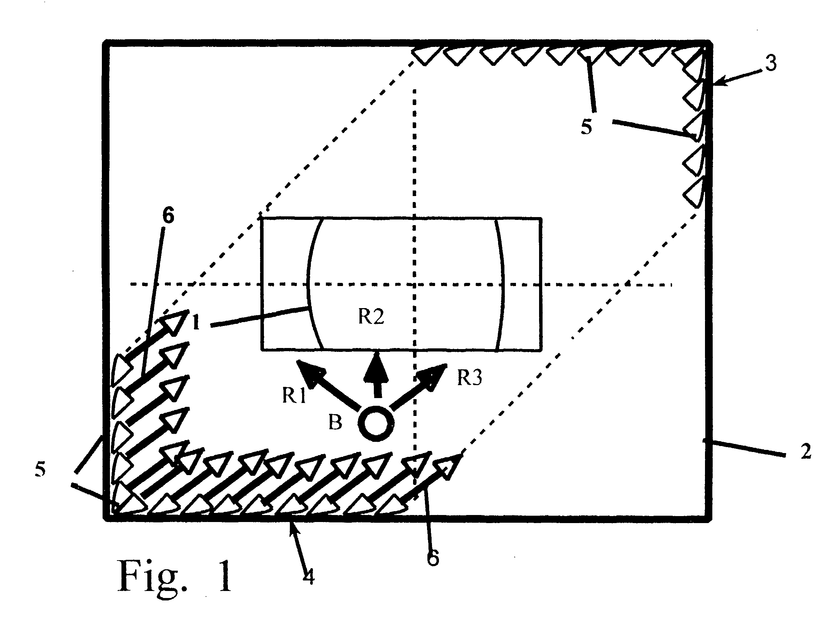

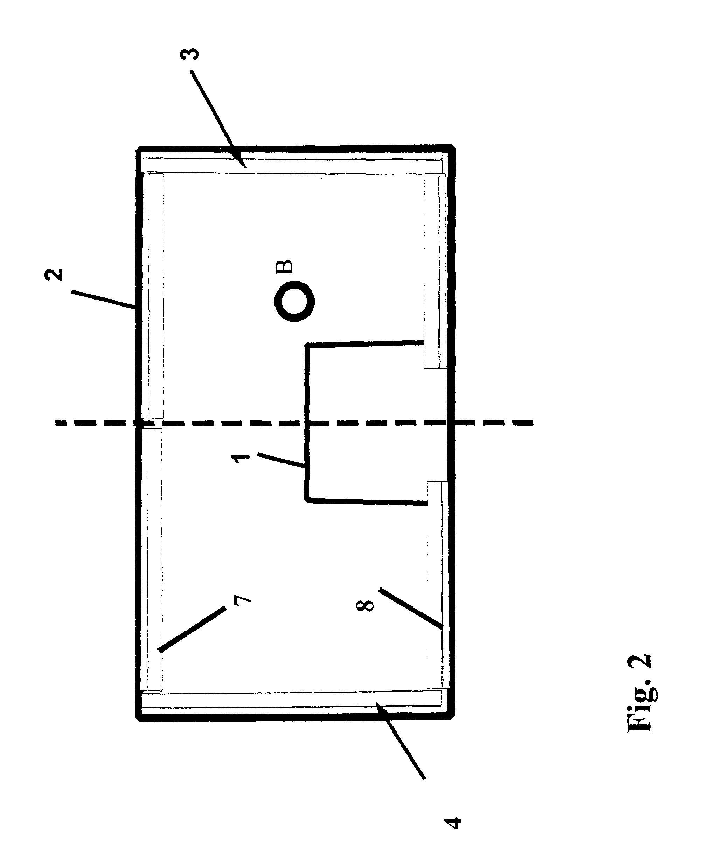

Die erfindungsgemäße Vorrichtung ist in dem Grundriß eines Abmusterungsraumes 2 in Fig. 1 und entsprechend schematisch in einem Querschnitt des Raumes in Fig. 2 dargestellt.

Der abzumusternde Gegenstand ist im Ausführungsbeispiel eine fertig lackierte Karosserie 1, die im wesentlichen aus senkrechten und waagerechten Abmusterungsflächen besteht, wobei jedoch auch leicht gewölbte oder gekrümmte Flächen mit eingeschlossen werden sollen. Der Gegenstand befindet sich in der Mitte des Raumes 2 und wird von einer Beleuchtungsanordnung 3, 4 beleuchtet, die an den Begrenzungswänden des Raumes 2 vorgesehen ist, wobei zwischen der Beleuchtungsanordnung 3, 4 ein Abstand oder ein Zwischenraum belassen ist, der mindestens so groß ist, daß eine Beobachtungsperson B sich in dem Zwischenraum gut bewegen kann.

Die Beleuchtungsanordnung 3, 4 besteht aus senkrecht angeordneten Leuchten 5, die im Ausführungsbeispiel übereck herum angeordnet sind, um Raum zu sparen, wobei die Beleuchtungsanordnung 3 gegenüberliegend zu der Beleuchtungsanordnung 4 angeordnet ist. Die Leuchten 5, deren Ausführungsbeispiele später näher beschrieben werden, strahlen in einem schrägen Winkel zu den senkrechten Flächen des Gegenstandes ab, wobei die Abstrahlungsrichtung durch die Pfeile 6 angedeutet ist. Der Abstrahlungswinkel beträgt vorzugsweise 45°, wobei die Abstrahlungsrichtung im einfachsten Falle durch Lamellen erreicht werden, die im Winkel von 45° parallel und mit Abstand zueinander vor einer leuchtenden Wand oder vor beliebig abstrahlenden Leuchten 5 angeordnet sind. Allerdings benötigen diese Lamellen relativ viel Raum, da sie ausreichend tief sein müssen, so daß spezielle Leuchten 5 mit bestimmter Abstrahlcharakteristik verwendet werden, wie später beschrieben wird.

Die senkrechten Teilflächen des Gegenstandes 1 werden somit immer schräg angeleuchtet und die Beleuchtungsanordnungen 3, 4 sind so ausgebildet, daß ein direkter Einblick aus Richtung der Normalen zu der senkrechten Teilfläche des Gegenstandes vermieden wird.

In Fig. 1 steht ein Beobachter B in dem Zwischenraum bzw. dem Gang zwischen dem Gegenstand 1 und den Beleuchtungsanordnungen 3, 4 und betrachtet die Seitenwand in unterschiedlichen Richtungen, die mit den Pfeilen R1, R2, R3 angedeutet sind. Wenn der Beobachter in die Richtung R2 blickt, sieht er die Karosserieseitenwand unter einem Glanzwinkel von 45°, wodurch die Farbe abgemustert werden kann. Eine Direktblendung durch die gegenüberliegende Beleuchtungsanordnung 3 wird wegen der Abschirmung beispielsweise durch die nicht dargestellten Lamellen verhindert. Durch die schräge Lichteinstrahlung schattet der Beobachter B das Sehfeld nicht ab.

Wenn der Beobachter B in die Richtung R1 sieht, so bildet sich wegen des kleinen Glanzwinkels die Beleuchtungsstruktur, das heißt die Struktur der Leuchten ab, wodurch Oberflächenfehler und Struktureffekte der Karosserieoberfläche erkannt werden können. Durch Betrachtung in die Richtung R3 kann der Beobachter B weitere Oberflächeneffekte, zum Beispiel den Flopp, erkennen.

Wenn gewünscht, kann somit eine Abmusterung sowohl nach Farbe als auch nach Oberflächen- und Strukturfehlern durchgeführt werden, wobei der Beobachter sich bei der Abmusterung in senkrechter Ausrichtung zwischen dem Gegenstand und der Beleuchtungsanordnung befindet.

In Fig. 2 ist der Raum nach Fig. 1 im Schnitt dargestellt, wobei hier zusätzlich zu den seitlichen Beleuchtungsanordnungen 3, 4 eine Beleuchtungsanordnung 7 an der Decke und eine Beleuchtungsanordnung 8 am Boden vorgesehen ist. Durch eine solche zusätzliche Beleuchtungsanordnung 7, 8 können insbesondere Oberflächenfehler im Dachbereich und im unteren Bereich der Karosserie besser erkannt werden, wobei dies ebenso für die Motorhaube und den Kofferraumdeckel bzw. niedrigliegende horizontale Flächen gilt.

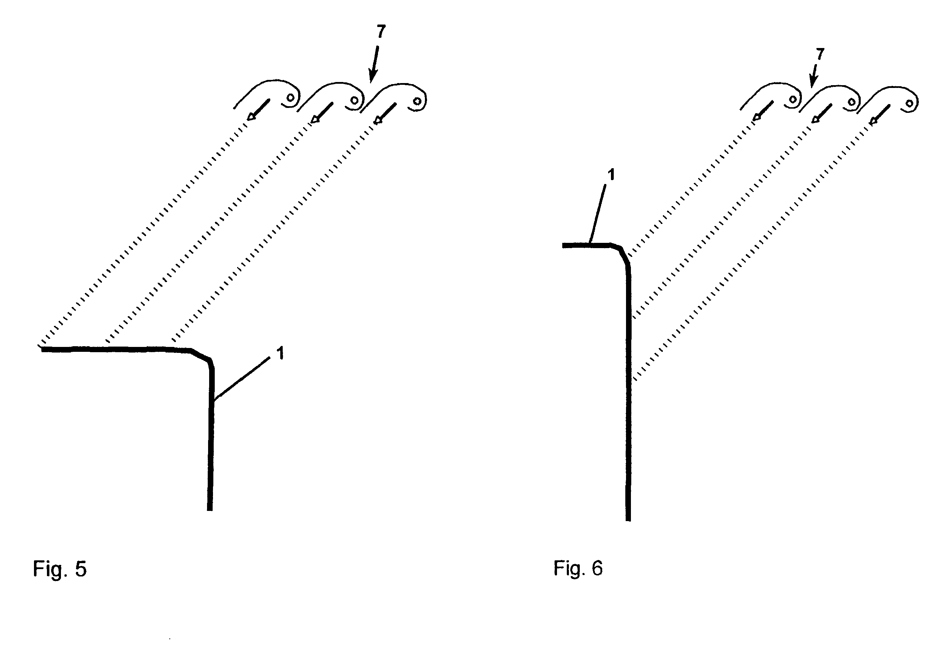

Die Beleuchtungsanordnung 7 besteht entweder aus tiefstrahlenden Deckenleuchten mit kleinem Abstrahlungswinkel oder aus Deckenleuchten, die ein- oder beidseitig das Licht schräg abstrahlen und vorteilhafterweise aus Richtungen senkrecht von unten und in einem Winkelbereich um diese Richtung abgeschirmt sind. In den Fign. 5 und 6 ist schematisch eine Beleuchtungsanordnung 7 für die Decke dargestellt, wobei die Abstrahlrichtung ebenfalls 45° zu den Oberflächen des Gegenstandes 1 liegt. In Fig. 6 wird die Deckenbeleuchtung 7 auch zur Betrachtung der oberen Seitenflächen verwendet. Die Beleuchtungsanordnung 8 am Boden besteht aus Bodenleuchten, die ein- oder beidseitig das Licht schräg abstrahlen, und sind vorteilhafterweise aus Richtungen senkrecht von oben und in einem Winkelbereich um diese Richtung abgeschirmt. Die Leuchten der Beleuchtungsanordnung am Boden sind zweckmäßigerweise quer zur Oberfläche des Gegenstandes 1 angeordnet.

In einem anderen Ausführungsbeispiel sind die Beleuchtungsanordnungen 7, 8 an der Decke und am Boden durch Spiegel ersetzt, die am Boden und an der Decke angeordnet sind, und die die Beleuchtungsgeometrie der seitlichen Beleuchtungsanordnungen 3, 4 widerspiegeln. Gegebenenfalls können die Beleuchtungsanordnungen 7 und 8 auch weggelassen werden, wobei dann die seitlichen Beleuchtungsanordnungen 3, 4 ihre Funktion übernehmen.

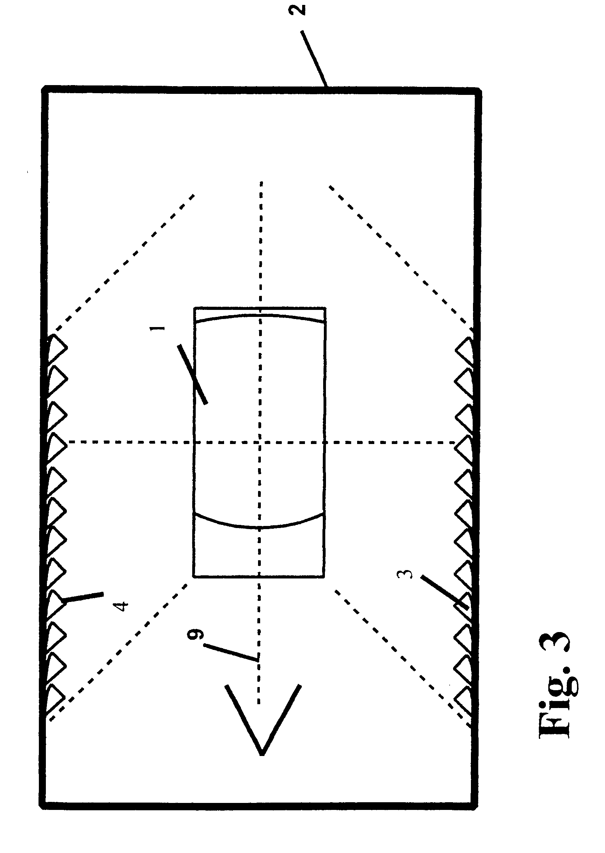

In Fig. 3 ist ein weiteres Ausführungsbeispiel mit zu Fig. 1 unterschiedlicher Geometrie dargestellt, wobei hier die seitlichen Beleuchtungsanordnungen 3, 4 lediglich an gegenüberliegenden langgestreckten Seitenwänden vorgesehen sind. Der Gegenstand 1, zum Beispiel die Karosserie, befindet sich dabei auf einem Transportband 9, wobei hier im wesentlichen die Seitenflächen des Gegenstandes abgemustert werden. Eine solche Anordnung ist beispielsweise auch als Montagebeleuchtung geeignet.

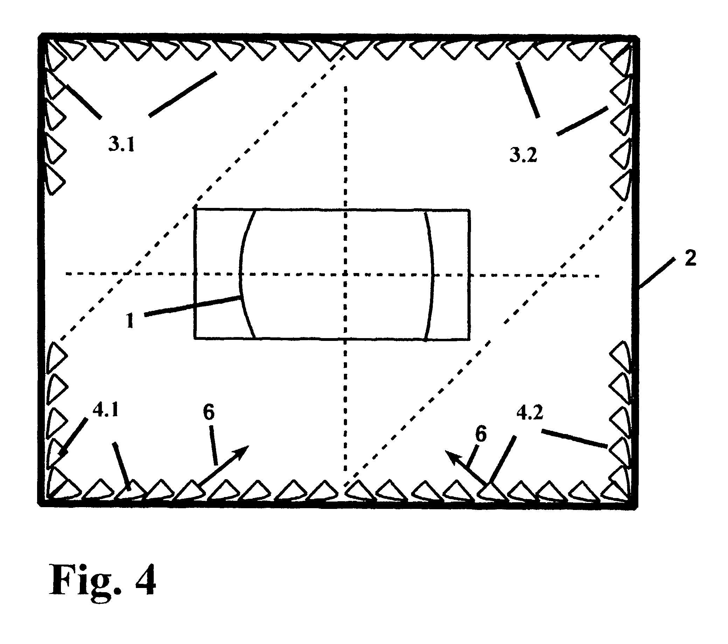

Eine weitere Ausführungsform der erfindungsgemäßen Vorrichtung ist in Fig. 4 dargestellt, wobei die Beleuchtungsanordnung 4 in die Beleuchtungsanordnung 4.1 und 4.2 und entsprechend die Beleuchtungsanordnung 3 in die Beleuchtungsanordnung 3.1 und 3.2 aufgeteilt sind. Dabei strahlen jeweils die Leuchten 5 der Beleuchtungsanordnung 4.1 und 4.2 bzw. 3.1 und 3.2 in Strahlrichtungen 6 ab, die senkrecht aufeinanderstehen, aber beide im Winkel von etwa 45° zur senkrechten Fläche des Gegenstandes 1 liegen. Bei dieser Anordnung kann die Abmusterung rund um den Gegenstand durchgeführt werden, wobei die senkrechten Flächen aus jeweils zwei Richtungen nacheinander oder gleichzeitig beleuchtet werden können, um bei gleichzeitiger Beleuchtung richtungsabhängige Farbeffekte zu vermindern und bei getrennten Beleuchtungen alle Effekte erkennbar zu machen.

Es ist durchaus möglich, daß die senkrechten Beleuchtungsanordnungen 3, 4 aus Leuchten bestehen, die, in horizontaler Ebene gemessen, beidseitig schräg, vorzugsweise unter ± 45°, abstrahlen und die aufgrund ihres optischen Systems oder durch eine entsprechende Lamellenanordnung gegen direkten Einblick aus Richtung der Normalen der senkrechten Abmusterungsflächen abgeschirmt sind. In diesem Fall können durch Wechsel der Blickrichtung ebenfalls Strahlengänge mit und ohne Abbildung der Beleuchtungsstruktur verwirklicht werden, jedoch können Floppeffekte bei einer Metallic-Lackierung nicht mehr erkannt werden.

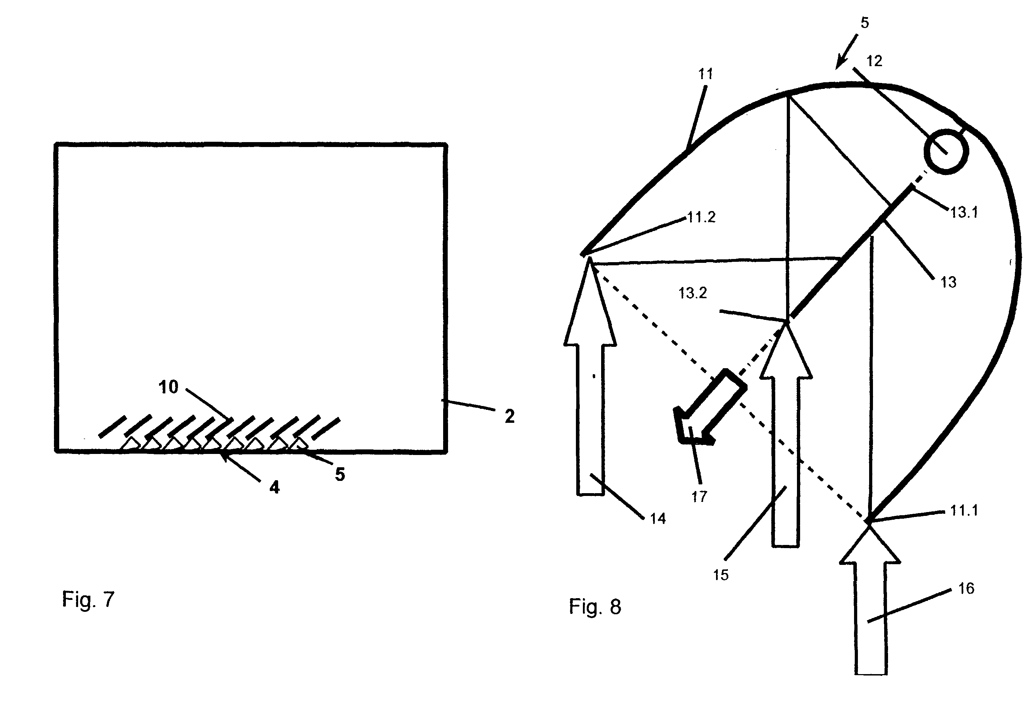

Bei den Beleuchtungsanordnungen 3, 4 ist die Trennung von Leuchte 5 und Abschirmvorrichtung durch die Lamellen 10 in Fig. 7 aufwendig und erschwert variable Lösungen, bei denen die Beleuchtungselemente modulartig zusammensetzbar sind. Außerdem ergeben sich relativ große Bautiefen, die nachteilig sind. Daher sollen speziell angepaßte Leuchten verwendet werden, die im folgenden beschrieben werden.

Die geometrische Bedingung für die Dimensionierung des optischen Systems einer Leuchte 5 ergibt sich aus der Betrachtung von Probelichtstrahlen, deren Verlauf im optischen System berücksichtigt wird. Eine Leuchte 5 mit einem solchen Strahlengang ist in Fig. 8 dargestellt. Die Leuchte 5, die im Querschnitt gezeigt ist, besteht aus einem einachsig gekrümmten Reflektor 11, der im Ausführungsbeispiel parabolisch ausgebildet ist, aber auch elliptisch sein kann, oder durch Polygonzüge zusammengesetzt ist, und aus einer langgestreckten Lampe 12, beispielsweise eine Leuchtstofflampe, wobei der Reflektor 11 das Licht der Leuchtstofflampe 12 in Ebenen quer zur Lampenachse bündelt. Die Hauptstrahlungsrichtung der Leuchte 5 wird durch den Pfeil 17 angedeutet, wobei die Hauptstrahlungsrichtung 17, wie oben beschrieben, im Winkel von etwa 45° zu den senkrechten Seitenflächen des abzumusternden Gegenstandes 1 liegt. Um die Blickrichtung des Beobachters B gegen die Abstrahlung der Leuchte 5 abzuschirmen, ist über die gesamte Höhe der Leuchte 5 vorzugsweise in der senkrechten Symmetrieebene des Reflektors 11 vor der Lampe 12 eine Blende 13 angeordnet. Dabei wird die Tiefe des Reflektors 11 auf die Breite und Position der Blende 13 so abgestimmt, daß bei einem gegenüber der Hauptstrahlrichtung 17 schrägen Einblick, vorzugsweise unter 45°, die Lampe 12 weder direkt noch nach Reflexion über die Oberfläche des Reflektors gesehen werden kann. Die Dimensionierung des optischen Systems ist daher so durchzuführen, daß alle Lichtstrahlen in Richtung des schräg zur Hauptabstrahlrichtung 17 positionierten Beobachters entweder direkt von der Blende 13 odere nach Reflexion am Reflektor 11 aufgefangen werden. Dazu sind folgende Bedingungen einzuhalten, die anhand der Strahlengänge erläutert werden. Ein Lichtstrahl 16, der schräg zur Hauptstrahlrichtung 17 am vorderen Rand 11.1 in den Reflektor eintritt, muß vor dem hinteren Rand 13.1 der Blende 13 auf diese auffallen. Ein Lichtstrahl 15 aus gleicher Richtung wie der Lichtstrahl 16, der am vorderen Rand 13.2 der Blende 13 vorbei auf den Reflektor 11 trifft, wird dort reflektiert und muß auf die Blende 13 treffen. Ein Lichtstrahl 14 aus gleicher Richtung wie die Lichtstrahlen 15 und 16 trifft auf den vorderen Rand 11.2 des Reflektors 11, wird dort reflektiert und muß auf die Blende 13 auftreffen. Diese Strahlengänge sind in Fig. 8 dargestellt. Durch diese Maßnahme wird sichergestellt, daß aus den beschriebenen Richtungen der Reflektor immer in der Farbe der Blende - also dunkel - erscheint, daß also weder die Leuchtdichte der Lampe noch die in den Reflektor eindringende Umgebungshelligkeit in die Richtungen 14, 15, 16 strahlen.

Bei strukturierten oder facettierten Oberflächen des Reflektors 11 weiten sich die Lichtstrahlen in Lichtbündel auf, so daß die Blende 13 dann zu vergrößern ist, bis sämtliche Lichtstrahlen von der Blende 13 erfaßt sind.

Bei Erfüllung der angegebenen Bedingungen ist aus der jeweiligen Beobachtungsrichtung ein Einblick auf die Oberflächen der Lampe 12 weder direkt noch nach Reflexion über die Reflektoroberfläche nicht mehr möglich.

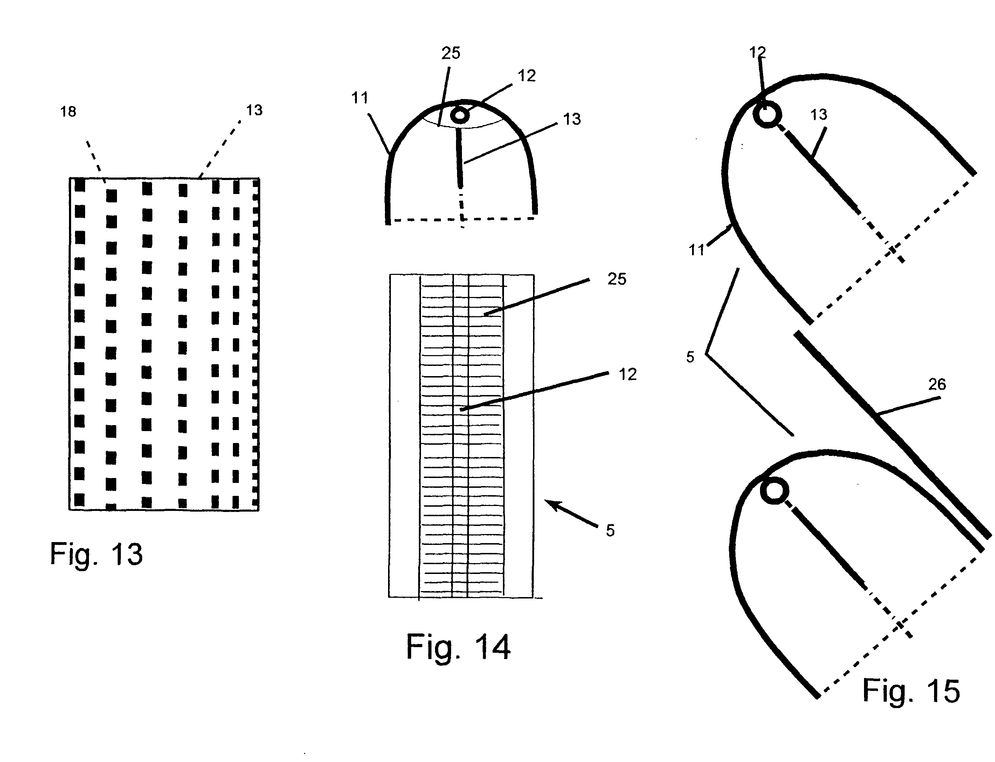

Die Oberflächen der Blende 13 müssen einerseits so gestaltet sein, daß der von der Lampe direkt auffallende Lichtstrom eine geringe Helligkeit in Richtung des schräg zur Hauptstrahlrichtung 17 befindenden Beobachters bewirkt, andererseits aber eine gute Qualität der Abmusterung gestatten. Dies ist gegeben, wenn beide Seiten der Blende 13 absorbierend ausgeführt und im Falle der Farbabmusterung farbneutral, zum Beispiel schwarz odr grau, gestaltet werden. Um eine gleichmäßige Helligkeitsverteilung auf der Oberfläche der Blende 13, die vom Beobachter abgewandt ist, zu bewirken, ist in einem anderen Ausführungsbeispiel diese mit einem lichtabsorbierenden Verlaufsraster versehen, das in lampennahen Bereichen stärker ausgeführt ist. Ein solches Absorptionsraster 18 ist in Fig. 13 ausgeführt. Dabei ist die linke Seite der Zeichenebene die, die der Lampe 12 zugewandt ist.

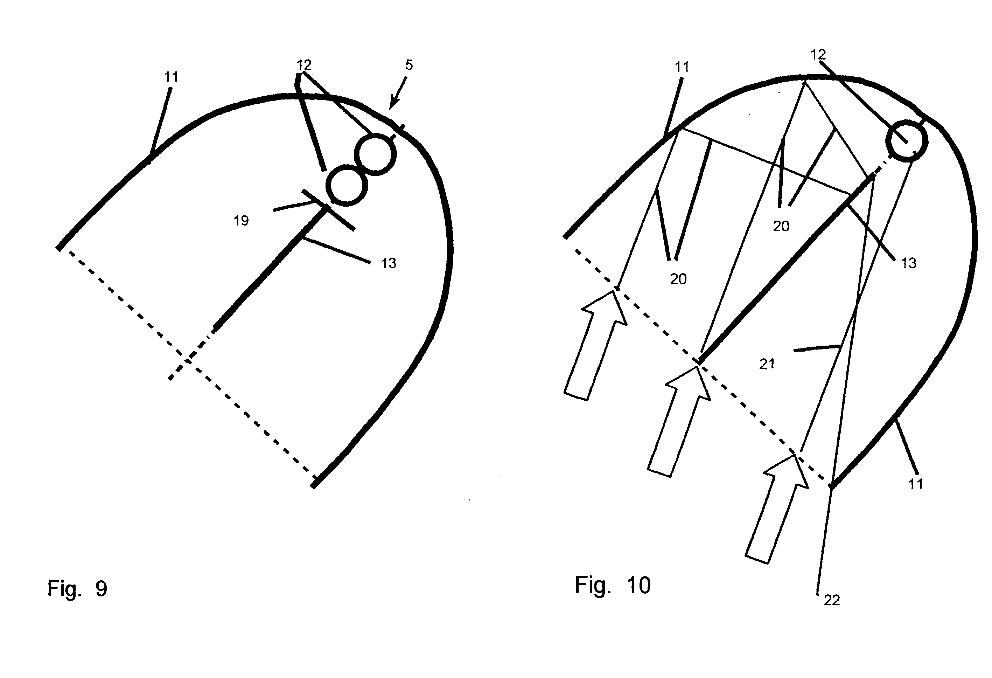

In Fig. 9 ist eine weitere Leuchte 5 im Schnitt dargestellt, bei der zwei Lampen 12 zur Vergrößerung des abgestrahlten Lichtstroms eingesetzt sind. Die Lampen 12 sind zur noch besseren Entblendung durch ein quer zur Blende 13 angeordneten Reflektor 19 abgedeckt.

In Fig. 10 ist ein weiteres Ausführungsbeispiel der Leuchte 5 mit Strahlengängen dargestellt, wobei hier die Blende 13 im Gegensatz zu den Fign. 8 und 9 bis zur vorderen Abschlußkante des Reflektors 11 reicht.

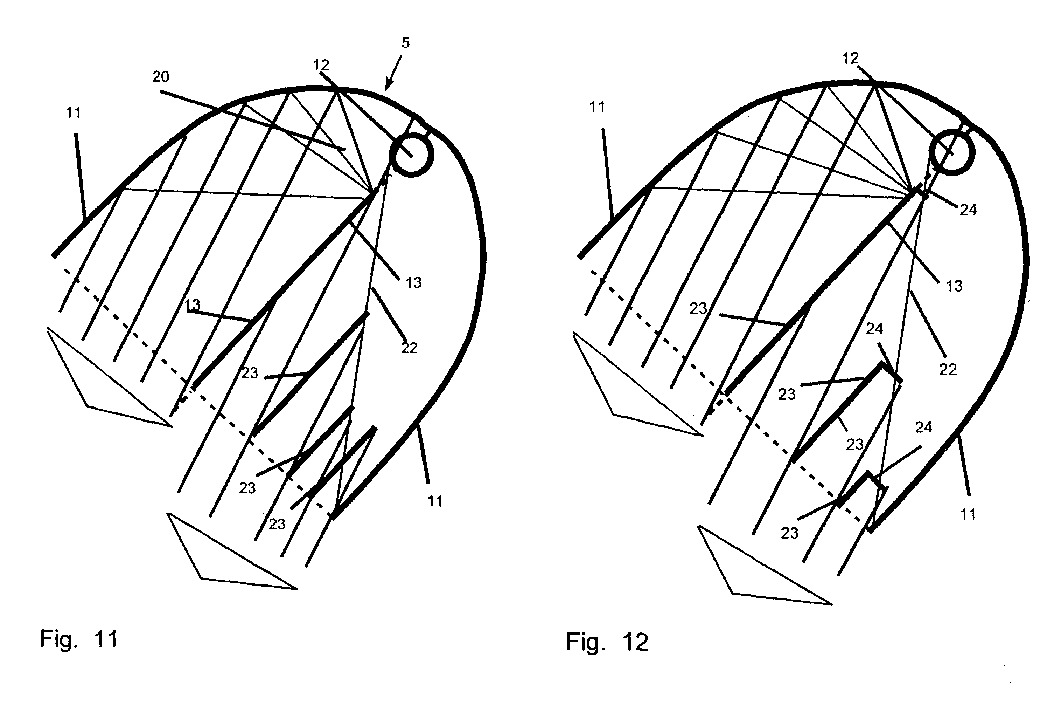

Es zeigt sich, daß bei schrägem Einblick in die Leuchte 5 aus Richtungen außerhalb der Hauptstrahlrichtung 17 sich für beide Seiten des Reflektors 11 unterschiedliche Abschirmungen ergeben. Diese Verhältnisse sind in Fig. 10 dargestellt, wobei die einen Einblick simulierenden Probelichtstrahlen 20 nach Reflexion an der in der Zeichenebene oberen Reflektorseite auf die absorbierende Blende 13 treffen, während Probelichtstrahlen 21 aus gleicher Richtung auf die Lampe 12 treffen und somit aufleuchten. Probelichtstrahlen 22, die an der vorderen Kante 11.1 des Reflektors 11 vorbeigehen, treffen auf die Blende 13 und bleiben dunkel. Somit ist eine Entblendung für die vom Beobachter B weiter entfernte, und in der Zeichenebene obere Reflektorhälfte günstiger als für die dem Beobachter zugewandte, in der Zeichenebene untere Reflektorhälfte. Diese Erkenntnis ist in den Fign. 11 und 12 berücksichtigt, in denen parallel zu der Blende 13 in der einen Reflektorhälfte weitere Blenden 23 angeordnet sind, die beispielsweise die Lichtstrahlen entsprechend Lichtstrahl 21 in Fig. 10 abschirmen. Ihre Tiefe kann so ausgebildet sein, daß der Lichtstrahl 22 als Grenze dient. Die weiteren Blenden 23, die parallel zur Mittenblende 13 ausgerichtet sind, um die Abstrahlung des Reflektors 11 möglichst wenig zu behindern, können entsprechend Fig. 12 an ihrem der Lampe 12 zugewandten Ende abgeknickt sein, um ihre Standfestigkeit zu erhöhen. Vorzugsweise ist die der Lampe zugewandte Seite des abgeknickten Teils 24 der Lamellen 23 reflektierend, insbesondere hochglänzend gestaltet, wodurch der Leuchtenwirkungsgrad maximiert wird. Auch die Mittenblende 13 kann entsprechend abgeknickt sein.

In einem weiteren nicht dargestellten Ausführungsbeispiel sind alle Blenden 13, 23 keilförmig, mit ihrem breiteren Ende zur Lampe hin gerichtet, ausgebildet, die den Vorteil großer mechanischer Stabilität besitzen.

Für die Frage der Oberflächen gilt für die weiteren Blenden das gleiche wie für die Mittenblende 13, allerdings können die der Lampe zugewandten Seiten der Blenden 23 reflektierend, insbesondere hochglänzend ausgeführt sein.

In der Figur 14 ist eine weitere Maßnahme zur Optimierung der Lichtabstrahlung der Leuchten 5 dargestellt. Bei den langgestreckten Lampen 12 bezieht sich die Bündelung des Reflektors 11 immer auf Ebenen quer zur Lampenachse. Eine weitere Optimierung durch Bündelung der Lichtstrahlen auch in vertikalen Ebenen kann erreicht werden, wenn durch an sich bekannte lichtabsorbierende Lamellen oder parabolgekrümmte gerichtet reflektierende Lamellen, die parallel zueinander quer zur Lampenachse vor dem Reflektor oder im Reflektorinnenraum angeordnet sind. Um besonders viel Licht auf die Karosserie zu richten, können solche Lamellen auch schräg bei gleichzeitiger Ausrichtung quer zur Lampenachse angeordnet sein. Dies ist acuh vorteilhaft bei über Kopf senkrecht angeordneten Leuchten, deren nutzbarer Lichtstrom nach unten gerichtet ist. Die Lamellenwirkung kann durch als prismatische Scheiben realisiert oder ergänzt werden, wie sie in Fig. 14 dargestellt sind. Die Scheiben 25 sind in dieser Ausführungsform gekrümmt direkt vor der Lampe 12 zwischen Lampe und Blende 13 über die gesamte Höhe angeordnet. Im oberen Teil von Fig. 14 ist der Schnitt der Leuchte 5 und im unteren Teil die Seitenansicht dargestellt. Die Scheiben 25 können mit quer zur Lampenachse verlaufenden, auf der der Lichtaustrittsfläche zugewandten Seite angeordneten dreieckigen Prismen versehen sein, vorzugsweise mit einem spitzen Winkel von 120°, weil diese die Lichtverteilung quer zur Lampenachse nicht stören.

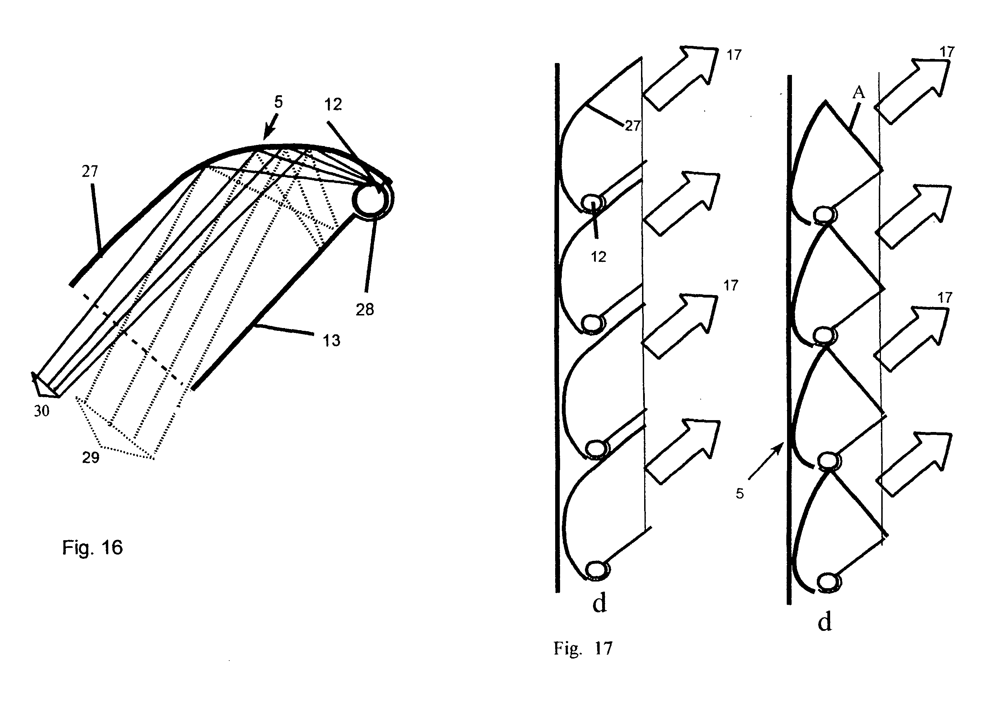

In Fig. 15 sind zwei Leuchten 5 nebeneinander angeordnet, wobei ihre Hauptstrahlrichtung wiederum 45° zu den Seitenflächen des abzumusternden Gegenstandes 1 beträgt. Bei Ausleuchtung großer Flächen werden, wie in Fig. 1 dargestellt, eine Vielzahl von derartigen Leuchten 5 als Modulleuchten nebeneinander aufgestellt. Um Absorptionsverluste an den Außenflächen der Leuchten 5 auf ein Minimum zu reduzieren, sind an den seitlichen Außenflächen der Leuchtengehäuse gerichtet reflektierende Reflektoren 26 angeordnet, die sozusagen die Fortsetzung des Innenreflektors 11 der Leuchte 5 bildet. Diese Reflektoren 26 können zumindest teilweise in die Gehäuseform integriert werden.

Wenn jedoch wie bei der Farbabmusterung Reflexe der Umgebung unterdrückt werden sollen, sind vorzugsweise die Flächen 26 farbneutral und Licht absorbierend, zum Beispiel schwar oder grau, ausgeführt.

In den Figuren 11 und 12 ist zur Verbesserung der Abschirmung in der dem Beobachter zugewandten Reflektorhälfte eine Mehrzahl von Blenden 23 angeordnet, wodurch die Entblendung erheblich verbessert wird, jedoch auch der Leuchtenwirkungsgrad vermindert wird. In Fig. 16 ist somit in Weiterführung des Gedankens der Entblendung, aber mit verbessertem Leuchtenwirkungsgrad eine weitere Ausführungsform der Leuchte 5 dargestellt, mit der zusätzlich die Bautiefe der gesamten Beleuchtungsanordnung verringert werden kann. Dabei ist die dem Beobachter zugewandte Reflektorhälfte "abgeschnitten", und die Leuchte 5 besteht aus einem bogenförmigen Reflektor 27, der wie der Reflektor 11 kontinuierlich geformt sein kann oder sich durch ebene ode gekrümmte Streifen zusammensetzt und dessen Oberfläche hochglänzend oder zur Erhöhung der Gleichmäßigkeit der Lichtabstrahlung leicht strukturiert sein kann, wobei sich an das im Querschnitt bogenförmige Teil ein im wesentlichen kreisbogenförmiges Reflektorteil 28 anschließt und die Lampe 12 in diesem im Querschnitt kreisbogenförmigen Teil 28 aufgenommen wird. An das Ende des kreisbogenförmigen Teils 28 schließt sich die Blende 13 an, die gleichzeitig die Begrenzungsfläche nach außen darstellt. Das im Querschnitt kreisbogenförmige Reflektorteil 28 stellt dabei einen lichtsammelnden Reflektor dar, der das Licht mit der Wirkung einer kleinen Grundstreuung des Systems jedoch kleineren Wirkungsgrads in die Lampe zurückschickt oder aber das Licht um die Lampe herum leitet mit der Wirkung einer größeren Grundstreuung und eines höheren Wirkungsgrades. Das Reflektormaterial ist dabei vorzugsweise hochglänzend mit möglichst hohem Reflektionsgrad der gerichteten Reflektion.

In Fig. 16 ist eine Leuchte 5 mit einer asymmetrischen Lichtverteilung, die auf der dem Beobachter zugewandten Seite scharf abgeschnitten ist und auf der dem Beobachter abgewandten Seite beliebig breit strahlen darf, mit verschiedenen Strahlengängen dargestellt. Die Probelichtstrahlen aus der Richtung 29 erfüllen die gewünschten Abschirmbedingungen, indem sie auf die Blende 13, die entsprechend der Blende in den vorhergehenden Ausführungsbeispielen ausgebildet ist, treffen. Die Richtung der Probelichtstrahlen liegt außerhalb der durch die von der Lampe 12 stammenden Lichtstrahlen bestimmten Lichtverteilung 30 des Reflektors 1. Ein direkter Einblick auf die Lampe 12 aus Richtungen, denen die Außenseite der Blende 13 zugewandt ist, ist nicht möglich. Das Reflektorteil 28 sammelt das Lampenlicht und reflektiert es in die Lampe, so daß sich deren mittlere Leuchtdichte erhöht. In diesem Fall bleibt die Grundstreuung, die sich aus der Größe der Lampe 12 ergibt, erhalten.

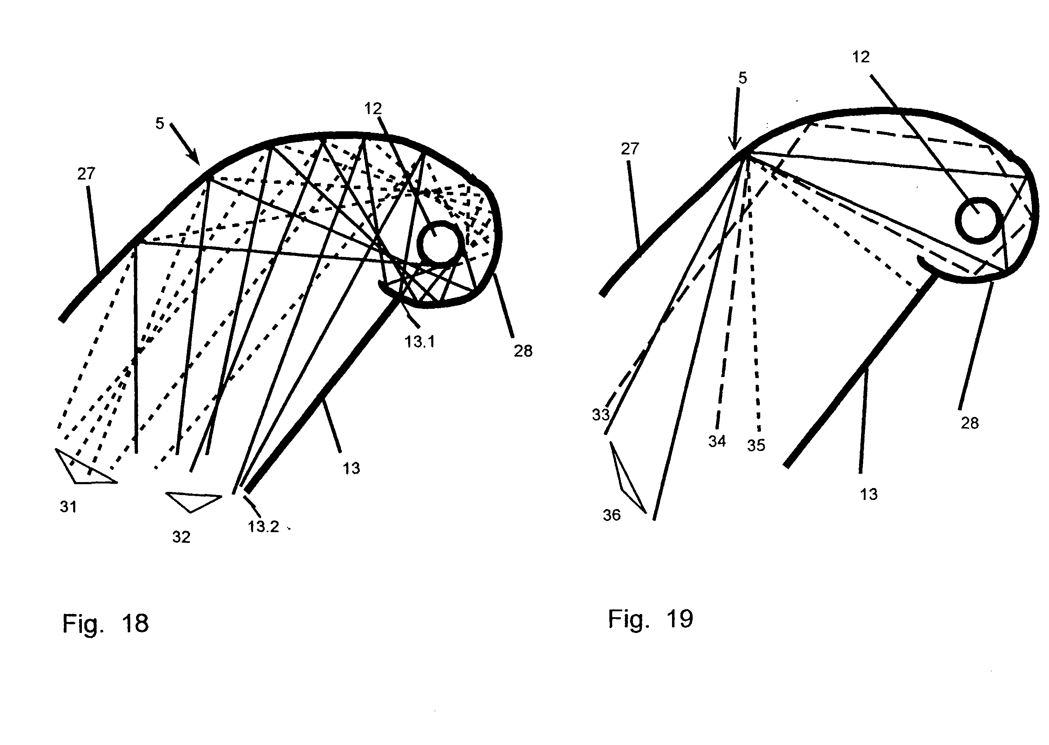

In Fig. 18 und Fig. 19 ist ein weiteres Ausführungsbeispiel dargestellt, bei dem das Reflektorteil 28 einen größeren Abstand zur Lampe 12 aufweist, wodurch die Lampe 12 optisch vergrößert wird. In diesem Fall ist das im Querschnitt teilkreisförmige Reflektorteil 28 so geformt, daß Lichtstrahlen 31, die in einem gewissen Bereich hinter der Lampe 12, und Lichtstrahlen 32, die vor der Lampe 12 auf das Reflektorteil 28 treffen, nach Spiegelung auf die Lampe 12 gelangen. Dadurch wird die Lampe 12 scheinbar vergrößert und eine größere Grundstreuung des Reflektors erzielt. Da die Lichtstrahlen nicht in die Lampe zurückgespiegelt und somit nicht absorbiert werden können, besitzt dieser Reflektor einen hohen Wirkungsgrad. Die Form des bogenförmigen Reflektorteils 27 wird zweckmäßigerweise so bestimmt, daß eine geschlossene Ausleuchtung zwischen 31 und 32 entsteht, und vorzugsweise so, daß alle Lichtstrahlen am Anfangspunkt 13.2 der Blende vorbeigespiegelt werden. Das halbkreisförmige Reflektorteil 28 wiederum wird vorzugsweise so weit um die Lampe herum angeordnet und über die Blende 13 hinausgezogen, daß die Blende 13 von der Lampe 12 nicht bestrahlt wird. Die Endkante 13.1 der Blende 13 kann beliebig im Schatten des Reflektorteils 28 angeordnet werden, sollte aber unmittelbar an ihn anschließen.

In Fig. 19 ist ein anderer Strahlengang dargestellt, und es wird die Abblendwirkung für die Lichtstrahlen 33, 34 und 35 gezeigt. Diese Lichtstrahlen berühren zwar das im Querschnitt teilkreisförmgige Reflektorteil 28, werden aber ohne auf die Lampe 12 zu treffen wieder aus dem Reflektorteil 28 hinausgeführt, so daß die Probelichtstrahlen nicht die Leuchtdichte der Lampe 12 annehmen können. Die dunklen Probelichtstrahlen 33, 34, 35 liegen außerhalb des Lichtbündels 36.

Es kann zusätzlich eine Blende senkrecht auf die Fläche des Reflektorteils 28 zwischen diesem und der Lampe 12 vorgesehen werden, damit der Strahlengang innerhalb des lichtsammelnden Reflektorteils 28 unterbrochen wird. Durch lichtabsorbierende Eigenschaften der Zusatzblende wird die Entblendung der Leuchte 5 weiter verbessert.

Die Leuchten 5 sind vorzugsweise zumindest näherungsweise quer zur Hauptstrahlungsrichtung 17 mit Abschlußscheiben abgeschlossen, um störende Reflexionen an der Oberfläche der Abdeckscheiben zu vermeiden. Vorzugsweise sind solche Abschlußscheiben nichtstreuend ausgeführt. Um weiche Übergänge zwischen den Lichtverteilungen benachbarter Leuchten zu erreichen, kann es günstig sein, die Abschlußscheiben leicht streuend auszuführen. In Sonderfällen kann eine starke Streuung gewählt werden, wenn die Blendungsbegrenzung von weniger wichtiger Bedeutung ist.

In Fig. 17 ist eine Mehrzahl von Leuchten 5 entsprechend den Figuren 16, 18, 19 angeordnet, die schräg aneinandergereiht sind, wobei ihre Hauptstrahlrichtung 17 im Winkel von 45° zur Abmusterungsfläche ausgerichtet sind. Es ist zu erkennen, daß die Bautiefe d nur durch "eine" Reflektorhälfte bestimmt ist und dadurch klein ist. Es sind zwei Ausführungsformen, mit und ohne Abdeckscheibe A, dargestellt.

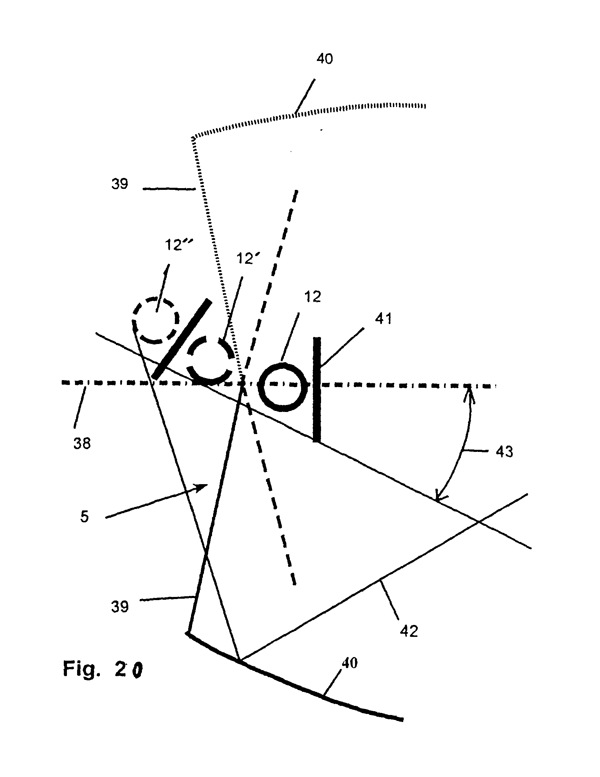

In Fig. 20 ist eine weitere Ausführungsform für eine Leuchte 5 im Querschnitt dargestellt, die für die seitliche Beleuchtungsanordnung 3, 4 in Fig. 1 verwendbar ist, wenn die Farbabmusterung von untergeordneter oder keiner Bedeutung ist. Es ist ein zu einer Symmetrieebene 38 symmetrisch gestalteter Reflektor 39, 40 vorgesehen, wobei jeweils ein ebenes Reflektorteil 39 in einem Winkel von etwa 75° zur Symmetrieebene 38 angeordnet ist, an das sich ein leicht gekrümmtes Reflektorteil 40 anschließt. Auf bzw. in der Symmetrieebene ist eine wiederum langgestreckte Lampe 12 angeordnet, die quer zur Symmetrieebene 38 von einer, auf der der Lampe 12 zugewandten Seite hochglänzend ausgeführten Blende 41 abgedeckt ist.

In der Fig. 20 sind die Spiegelungen der Lampe 12 und der Blende 41 als virtuelle Lichtquellen 12', 12" und als virtuelle Blende dargestellt. Das Reflektorteil 40 reflektiert einen Grenzstrahl 42, der zunächst an der Blende 41 und dann am Reflektorteil 39 abgebildeten Lampe 12, d.h. der virtuellen Lampe 12", in Richtungen größer als ein Abblendwinkel 43 von 30 bis 40° zur Symmetrieebene 38. Die Breite des Reflektors 39, 40 ist so gewählt, daß die Lampe 12 und sämtliche Abbildungen 12', 12" erst uner Winkeln größer als der Abblendwinkel 43 sichtbar werden.

Die Leuchte 5 nach Fig. 20 ist besonders für die Fehlererkennung an glänzenden Karosserien bei gleichzeitiger schräger und damit schattenarmer Beleuchtung des Arbeitsfeldes und insbesondere von bewegten Arbeitsfeldern an Transportbändern geeignet. Auch sind sie vorteilhaft als Bodeneinbauleuchten senkrecht zur Transportrichtung und als Deckenleuchten einsetzbar. Sie können je nach erforerlicher Beleuchtungsstärke eng nebeneinander und auch im Abstand angeordnet sein.

Als Lampen 12 werden vorzugsweise Leuchtstofflampen verwendet, die eine geeignete spektrale Lichtverteilung aufweisen. Solche Lampen sollten möglichst ähnlich zu der vergleichenden natürlichen Lichtquelle, üblicherweise Tageslicht, sein. Die Eignung von Leuchtstofflampen ist dann gegeben, wenn ihr sogenannter Metamerieindex größer als 0,7 ist. Nachteilig bei solchen Lampen ist ihr starker Lichtstromabfall mit der Lebensdauer. Daher ist ein Regelkreis und eine Dimmvorrichtung vorgesehen, über die die Lampen im gedimmten Zustand betrieben werden können und die den Abfall, der mit der Lebensdauer zunimmt, erfaßt und an den Regelkreis meldet, wodurch die Dimmung zurückgenommen wird. Über die Dimmvorrichtung kann auch ein bestimmtes Beleuchtungsstärkeprofil für eine Mehrzahl von Leuchten eingestellt werden, das für eine zu inspizierende Fläche vorteilhaft ist.

Alle beschriebenen Leuchten können so ausgebildet sein, daß mehrere Reflektoren bzw. optischen Systeme parallel direkt oder mit Abstand nebeneinander in einem Gehäuse angeordnet sind.

Weiterhin können alle Leuchten bzw. Reflektoren so, zum Beispiel jeweils spiegelsymmetrisch zueinander asugebildet werden, daß sie für eine Abstrahlung von ± 45° geeignet sind, wodurch eine gleichmäßige Ausleuchtung insbesondere für die Montage, zum Beispiel auf Fließbändern, erzielt wird.

In der obigen Beschreibung wird bei den Lampen 12 von "langgestreckten" Lampen, d.h. linienförmigen Lampen, gesprochen. Unter diesen Begriff sollen auch im wesentlichen punktförmige Lampen mit entsprechenden Reflektoren fallen, die linienförmig angeordnet sind. Dadurch ergibt sich die Möglichkeit, die Lichtverteilungen nicht nur in einer Ebene, zum Beispiel der waagerechten, zu bündeln, sondern in allen räumlichen Richtungen.

Die oben beschriebenen Leuchte 5 können auch für Farbabmusterungen und Oberflächensinspektionen insbesondere für kleine Proben, zum Beispiel im Labor, verwendet werden, wobei dann nicht notwendig ist, daß der Beobachter sich zwischen Gegenstand bzw. Probe und Leuchten bewegen kann.

Beispielsweise kann die Probe unter einem Winkel von 45° beleuchtet werden und der Beobachter betrachtet die Probe von einer allgemeinen Beobachtungsrichtung von 0°. Dabei bleibt auch bei leichten Abweichungen von der Beobachtungsrichtung die Probe für den Beobachter aufgrund der oben beschriebenen Lichtverteilungskurve, die einen starken cut-off aufweist, dunkel, d.h. es gibt eine Direktblendung. Dabei können die Leuchten von oben oder seitlich auf waagerecht, in einem schrägen Winkel oder senkrecht angeordnete Proben, vorzugsweise unter einem Winkel von 45°, strahlen und der Beobachter betrachtet entsprechend die Probe aus einer Richtung senkrecht zur Probe mit für die Inspektion zugelassenen Winkelabweichungen.

## Patentansprüche

1. Vorrichtung zur visuellen Inspektion der Oberflächenbeschaffenheit von Abmusterungsflächen größerer Abmessung, insbesondere lackierten Karosserien oder Flächen, bei der mehrere Leuchtelemente (3,4,5) in fester Zuordnung zu der Abmusterungsfläche (1) vorgesehen sind,
**dadurch gekennzeichnet,**
**daß** die Hauptstrahlrichtung (6,17) der Leuchtelemente jeweils in schrägem Winkel zur Abmusterungsfläche (1) verläuft, wobei die Leuchtelemente (3,4,5) mit Abschirmungen (11,13,28,41) versehen sind, die in einer Richtung zwischen Hauptstrahlrichtung (6,17) und der Richtung (R2) auf die Abmusterungsfläche zu wirksam sind, derart, daß zumindest bei Beobachtung der Abmusterungsfläche aus Winkeln nahe der Richtung (R2) der Normalen auf diese keine leuchtenden Teile der Leuchtelemente gespiegelt werden.

2. Vorrichtung nach anspruch 1, **dadurch gekennzeichnet, daß** die Abschirmungen (11,13,28,41) für die Leuchtelemente (3,4,5) so ausgebildet sind, daß Strahlen, die aus Richtungen der Normalen der Abmusterungsfläche (1) und in einem Winkelbereich um diese Normalen herum auf Leuchtelemente treffen, entweder direkt oder nach Reflexion an den Leuchtelementen (3,4,5) zugeordneten lichtlenkenden Reflektoren auf lichtabsorbierende Blenden treffen.

3. Vorrichtung nach Anspruch 1 oder 2, **dadurch gekennzeichnet, daß** die Leuchtelemente (3,4,5) eine Fläche überdecken, die mindestens so groß ist wie die insgesamt abzumusternde Fläche (1).

4. Vorrichtung nach einem der Ansprüche 1 bis 3, **dadurch gekennzeichnet, daß** die Leuchtelemente (3,4,5) in einem Winkel von etwa 45° auf die Abmusterungsflächen (1) strahlen.

5. Vorrichtung nach einem der Ansprüche 1 bis 4, **dadurch gekennzeichnet, daß** die Abmusterungsflächen (1) und die Leuchtelemente (3,4,5) im wesentlichen senkrecht mit Abstand zueinander angeordnet sind, und daß die Beobachtungsposition (B) sich in dem Raum zwischen Abmusterungsfläche (1) und den Leuchtelementen befindet.

6. Vorrichtung nach einem der Ansprüche 1 bis 5, **dadurch gekennzeichnet, daß** die Leuchtelemente als langgestreckte Leuchten (5) mit lichtlenkendem Reflektor (11,27,28,39,40) und mindestens einer parallel zur Reflektorachse angeordneten Lampe (12) ausgebildet sind, wobei der Reflektor die Strahlung in Ebenen quer zur Lampenachse bündelt.

7. Vorrichtung nach einem der Ansprüche 1 bis 6, **dadurch gekennzeichnet, daß** die Abschirmung als vor den Leuchtelementen (5) schräg angeordneten Lamellen (10) ausgebildet ist.

8. Vorrichtung nach einem der Ansprüche 1 bis 7, **dadurch gekennzeichnet, daß** parallel zu der Hauptstrahlrichtung (17) des Reflektors (11,27) in Richtung auf die mindestens eine Lampe eine scheibenförmige erste lichtabsorbierende Blende (13) derart angeordnet ist, daß unter schrägen Winkeln zur Hauptstrahlrichtung (17) auf den Reflektor (11,27) auftreffende Lichtstrahlen von der Blende (13) direkt oder nach Reflexion an der Reflektoroberfläche aufgefangen werden.

9. Vorrichtung nach Anspruch 8, **dadurch gekennzeichnet, daß** zumindest ein einem Teil des Reflektors (11) parallel zur ersten Blende (13) mindestens eine weitere, vorzugsweise mehrere lichtabsorbierende Blenden (23) angeordnet sind.

10. Vorrichtung nach einem der Ansprüche 1 bis 9, **dadurch gekennzeichnet, daß** eine Blende (19,41) quer zur Hauptabstrahlungsrichtung (17) vor der Lampe (12) angeordnet ist.

11. Vorrichtung nach einem der Ansprüche 1 bis 10, **dadurch gekennzeichnet, daß** der Reflektor der Leuchte (5) aus einem ersten Reflektorteil (27), das das Licht der mindestens einen Lampe (12) in einer Hauptstrahlrichtung (17) bündelt, einem in der Nähe der Lampe und teilweise um diese herum angeordneten zweiten lichtsammelnden Reflektorteil (28) und einer dem ersten Reflektorteil (27) gegenüberliegenden absorbierenden und/oder lichtstreuenden Blende (13), die im wesentlichen parallel zur Hauptstrahlrichtung (17) ausgerichtet ist, besteht, wobei erstes Reflektorteil und zweites Reflektorteil ineinander übergehen und die Blende anschließend an das zweite Reflektorteil (28) zwischen diesem und der Lichtaustrittsfläche angeordnet ist.

12. Vorrichtung nach Anspruch 11, **dadurch gekennzeichnet, daß** das zweite Reflektorteil (28) in unmittelbarer Nähe um die mindestens eine Lampe herum oder direkt auf ihr angeordnet ist, derart, daß der wesentliche Teil des Lichts der Lampe auf diese reflektiert wird.

13. Vorrichtung nach Anspruch 11, **dadurch gekennzeichnet, daß** das zweite Reflektorteil (28) mit Abstand zu der mindestens einen Lampe (12) angeordnet ist, derart, daß ein wesentlicher Teil des Lichts der Lampe in den an diese unmittelbar anschließenden Raum gespiegelt wird.

14. Vorrichtung nach einem der Ansprüche 1 bis 13, **dadurch gekennzeichnet, daß** die Leuchtelemente mittels punktförmiger Lampenanordnungen realisierbar sind.

15. Vorrichtung nach einem der Ansprüche 1 bis 5, **dadurch gekennzeichnet, daß** die Leuchten jeweils einen symmetrisch gestalteten Reflektor aus zwei ebenen, hinter der Lampe angeordneten und jeweils schräg auf diese zulaufenden Reflektorteilen (39) und sich an diese am lampenfernen Ende anschließenden leicht gekrümmten Reflektorteilen (40) aufweisen, wobei vor der mindestens einen Lampe eine quer zur Symmetrieebene (38) des Reflektors angeordnete einseitig hochreflektierende Blende (41) angeordnet ist.

16. Vorrichtung nach einem der Ansprüche 1 bis 15, **dadurch gekennzeichnet, daß** die Leuchten mit einer Dimmvorrichtung verbunden sind, mit der ein Beleuchtungsprofil der Beleuchtungsanordnung (3,4) einstellbar ist, wobei die Dimmvorrichtung Bestandteil eines Regelkreises mit Sensoren zur Messung der Leuchtdichte der Lampen (12) ist und wobei die Lampen so dimmbar sind, daß unabhängig von der betriebsdauerbedingten Abnahme der Lichtausbeute der Lampen der Lampenlichtstrom konstant bleibt.

## Claims

1. Device for visually inspecting the surface condition of large-dimension surfaces to be matched, especially painted bodywork or surfaces, comprising a plurality of luminous elements (3, 4, 5) in a fixed relationship to the surface (1) to be matched **characterized in that** the principal radiation direction (6, 17) of the luminous elements runs respectively at an acute angle to the surface 81) to be matched, the luminous elements (3, 4, 5) being provided with screening devices (11, 13, 28, 41) which are effective in a direction between the principal radiation direction (6, 17) and direction (R2) towards the surface to be matched, in such a way that no luminous parts of the luminous elements are reflected on the surface to be matched when it is observed from angles close to the direction (R2) of the normal.

2. Device according to claim 1, **characterized in that** the screening devices (11, 13, 28, 41) for the luminous elements (3, 4, 5) are so configured that rays which hit luminous elements from directions of the normal of the surface (1) to be matched and in an angle range around this normal hit light-absorbent screens either directly or after being reflected on light-deflecting reflectors associated with the luminous elements (3, 4, 5).

3. Device according to claim 1 or claim 2, **characterized in that** the luminous elements (3, 4, 5) cover a surface which is at least as large as the total surface (1) to be matched.

4. Device according to one of claims 1 to 3, **characterized in that** the luminous elements (3, 4, 5) shine on to the surfaces (1) to be matched at an angle of roughly 45°.

5. Device according to one of claims 1 to 4, **characterized in that** the surfaces (1) to be matched and the luminous elements (3, 4, 5) are disposed substantially vertically at a mutual spacing, and the observation position (B) is located in the space between the surface (1) to be matched and the luminous elements.

6. Device according to one of claims 1 to 5, **characterized in that** the luminous elements are configured as elongate lights (5) having a light-deflecting reflector (11, 27, 28, 39, 40) and having at least one lamp (12) disposed parallel to the reflector axis, the reflector bundling the radiation in planes transversely to the lamp axis.

7. Device according to one of claims 1 to 6, **characterized in that** the screening is configured as lamellae (10) disposed obliquely in front of the luminous elements (5).

8. Device according to one of claims 1 to 7, **characterized in that** a disc-shaped first light-absorbent screen (13) is arranged parallel to the principal radiation direction (17) of the reflector (11, 27) in a direction towards the at least one lamp, in such a way that light rays hitting the reflector (11, 27) at oblique angles to the principal radiation direction (17) are caught by the screen (13) directly or after being reflected on the reflector surface.

9. Device according to claim 8, **characterized in that** at least one additional screen (23), preferably a plurality of same, is disposed at least in one portion of the reflector (11) parallel to the first screen (13).

10. Device according to one of claims 1 to 9, **characterized in that** a screen (10. 41) is disposed in front of the lamp (12) transversely to the principal direction (17) of radiation.

11. Device according to one of claims 1 to 10, **characterized in that** the reflector of the luminous element (5) consists of a first reflector portion (27) which bundles the light of the at least one lamp (12) in a principal radiation direction (17), a second light-collecting reflector portion (28)., disposed in the proximity of the lamp and partially around same, and an absorbent and/or light-scattering screen (13), located opposite the first reflector portion (27) and aligned substantially parallel to the principal radiation direction (17), the first reflector portion and the second reflector portion merging into one another and the screen being disposed after the second reflector portion (28) between the latter and the light exit surface.

12. Device according to claim 11, **characterized in that** the second reflector portion (28) is disposed in the immediate proximity around or directly on the at least one lamp, in such a way that the substantial portion of the light of the lamp is reflected on same.

13. Device according to claim 11, **characterized in that** the second reflector portion (28) is disposed at a spacing from the at least one lamp (12), in such a way that a substantial portion of the light of the lamp is reflected into the space immediately adjacent to said lamp.

14. Device according to one of claims 1 to 13, **characterized in that** the luminous elements may be realised by means of punctiform lamp arrangements.

15. Device according to one of claims 1 to 5, **characterized in that** the lights respectively have a symmetrically designed reflector made of two flat reflector portions (39) disposed behind the lamp and running respectively at an angle towards same, and slightly curved reflector portions (40) joining on to the other portions at their end remote from the lamp, a screen (41) which is highly reflective on one side being disposed in front of the at least one lamp transversely to the plane of symmetry (38) of the reflector.

16. Device according to one of claims 1 to 15, **characterized in that** the lights are connected to a dimming device, with which an illumination profile of the lighting arrangement (3, 4) may be set, the dimming device being a component of a control circuit with sensors for measuring the luminance of the lamps (12) and the lamps being dimmed in such a way that, independently of the reduction in the luminous efficiency of the lamps caused by the length of their operation, the luminous flux of the lamps remains constant.

## Revendications

1. Dispositif d'inspection visuelle de l'état de surfaces d'échantillonnage ayant des dimensions assez importantes, notamment des carrosseries ou des surfaces peintes, dans lequel plusieurs éléments d'éclairement (3, 4, 5) sont prévus selon une association fixe par rapport à la surface d'échantillonnage (1), **caractérisé en ce que** la direction de rayonnement principale (6, 17) des éléments d'éclairement s'étend respectivement obliquement en faisant un angle oblique par rapport à la surface d'échantillonnage (1), les éléments d'éclairement (3, 4, 5) étant pourvus d'éléments de protection (11, 13, 28, 41) qui sont actifs dans une direction se situant entre la direction de rayonnement principal (6, 17) et la direction (R2) tournée vers la surface d'échantillonnage, de telle sorte qu'au moins lorsqu'on observe la surface d'échantillonnage sous des angles proches de la direction (R2) de la normale, aucune partie éclairante des éléments d'éclairement n'est réfléchie sur cette surface.

2. Dispositif selon la revendication 1, **caractérisé en ce que** les éléments de protection (11, 13, 28, 41) pour les éléments d'éclairement (3, 4, 5) sont agencés de telle sorte que les rayons, qui rencontrent des éléments d'éclairement dans des directions de la normale à la surface d'échantillonnage (1) et dans une plage angulaire autour de cette normale, rencontrent soit directement, soit après réflexion, les réflecteurs, qui dévient la lumière, sont associés aux éléments d'éclairement (3, 4, 5) et sont disposés sur des diaphragmes absorbant la lumière.

3. Dispositif selon la revendication 1 ou 2, **caractérisé en ce que** les éléments d'éclairement (3, 4, 5) recouvrent une surface qui est au moins égale à la surface (1) qui doit globalement être échantillonnée.

4. Dispositif selon l'une des revendications 1 à 3, **caractérisé en ce que** les éléments d'éclairement (3, 4, 5) émettent un rayonnement sous un angle d'environ 45° en direction des surfaces d'échantillonnage (1).

5. Dispositif selon l'une des revendications 1 à 4, **caractérisé en ce que** les surfaces d'échantillonnage (1) et les éléments d'éclairement (3, 4, 5) sont disposés essentiellement perpendiculairement entre eux à une certaine distance et que la position d'observation (B) est située dans l'espace compris entre la surface d'échantillonnage (1) et les éléments d'éclairement.

6. Dispositif selon l'une des revendications 1 à 5, **caractérisé en ce que** les éléments d'éclairement sont agencés sous la forme d'appareils d'éclairement allongés (5) comportant un réflecteur (11, 27, 28, 39, 40) qui dévie la lumière, et par au moins une lampe (12) disposée parallèlement à l'axe du réflecteur, le réflecteur focalisant le rayonnement dans des plans transversaux.

7. Dispositif selon l'une des revendications 1 à 6, **caractérisé en ce que** le dispositif de protection est agencé sous la forme de lamelles (10) disposées obliquement devant les éléments d'éclairement (5).

8. Dispositif selon l'une des revendications 1 à 7, **caractérisé en ce qu'**un premier diaphragme en forme de disque (13) absorbant la lumière est disposé parallèlement à la direction de rayonnement principal (17) du réflecteur (11, 27) en direction d'au moins une lampe de telle sorte que des rayons lumineux, qui rencontrent le réflecteur (11, 27) sous des angles d'obliquité par rapport à la direction de rayonnement principal (17) sont reçus par le diaphragme (16) directement ou après réflexion sur la surface de réflecteur

9. Dispositif selon la revendication 8, **caractérisé en ce qu'**au moins un autre diaphragme et de préférence plusieurs diaphragmes (23) absorbant la lumière sont disposés sur au moins une partie du réflecteur (11) en étant parallèles au premier diaphragme (13).

10. Dispositif selon l'une des revendications 1 à 9, **caractérisé en ce qu'**un diaphragme (19, 41) est disposé transversalement par rapport à la direction de rayonnement principal (17) en avant de la lampe (12).

11. Dispositif selon l'une des revendications 1 à 10, **caractérisé en ce que** le réflecteur des dispositifs d'éclairement (5) est constitué par une première partie de réflecteur (27), qui focalise la lumière d'au moins une lampe (12) dans une direction de rayonnement principal, par une seconde partie de réflecteur (28) qui collecte la lumière et est disposée à proximité de la lampe et en partie autour de cette dernière et un diaphragme (13) qui absorbe et/ou disperse la lumière et est situé en vis-à-vis de la première partie du réflecteur (27) et est orienté essentiellement parallèlement à la direction de rayonnement principale (17), la première partie de réflecteur et la deuxième partie de réflecteur se prolongeant l'une l'autre, tandis que le diaphragme est disposé à la suite de la seconde partie de réflecteur (28) entre cette partie et la surface de sortie de la lumière.

12. Dispositif selon la revendication 11, **caractérisé en ce que** la seconde partie de réflecteur (28) est disposée à proximité directe et autour d'au moins une lampe ou directement sur cette dernière, de telle sorte que la partie essentielle de la lumière de la lampe est réfléchie sur cette partie de réflecteur.

13. Dispositif selon la revendication 11, **caractérisé en ce que** la seconde partie de réflecteur (28) est disposée à distance de la au moins une lampe (12), de telle sorte qu'une partie importante de la lumière de la lampe est réfléchie dans l'espace qui se raccorde directement à la lampe.

14. Dispositif selon l'une des revendications 1 à 13, **caractérisé en ce que** les éléments d'éclairement peuvent être réalisés à l'aide de dispositifs formés de lampes ponctuelles.

15. Dispositif selon l'une des revendications 1 à 5, **caractérisé en ce que** les éléments d'éclairement comportent chacun un réflecteur de forme symétrique constitué par deux parties de réflecteur planes (39), qui sont disposées derrière la lampe et convergent respectivement obliquement vers cette dernière, et des parties de réflecteur (40) légèrement cintrées, qui se raccordent aux parties de réflecteur au niveau de l'extrémité éloignée de la lampe, un diaphragme (41), qui est disposé transversalement par rapport au plan de symétrie (38) du réflecteur et réalise une réflexion intense d'un côté, étant disposé en avant de la au moins une lampe.

16. Dispositif selon l'une des revendications 1 à 15, **caractérisé en ce que** les lampes sont reliées à un dispositif atténuateur, au moyen duquel on peut régler un profil d'éclairement du dispositif d'éclairement (3, 4), le dispositif atténuateur faisant partie d'un circuit de régulation comportant des capteurs pour mesurer la densité d'éclairement des lampes (12), et l'éclairement des lampes pouvant être atténué de telle sorte que le flux lumineux des lampes reste constant indépendamment de la diminution, conditionnée par la durée de fonctionnement, du rendement lumineux des lampes.
